Europäisches Patentamt

European Patent Office

Office européen des brevets

(19)

(11) Publication number: **0 656 705 A2**

# EUROPEAN PATENT APPLICATION

(12)

(21) Application number: **94118731.2**

(22) Date of filing: **29.11.94**

(51) Int. Cl.6: **H04L 5/06**

(30) Priority: **01.12.93 IT TO930914**

(43) Date of publication of application:
**07.06.95 Bulletin 95/23**

(84) Designated Contracting States:
**DE ES FR GB IT NL PT**

(71) Applicant: **Società Italiana per lo Sviluppo dell'Elettronica S.I.SV.EL. S.p.A.**
**Via Castagnole, 59**
**I-10060 None (TO) (IT)**

(72) Inventor: **Cariolaro, Gianfranco**
**via Callegari, 3**
**I-35037 Teolo (PD) (IT)**

(54) **Orthogonally frequency multiplexing system.**

(57) A data transceiver system via radio of amplitude modulation in quadrature of orthogonal multiplexing (OQAM) is described, wherein a plurality of sub-channels occupy equally spaced frequencies and the frequency location of sub-channels in the transmitter is realised by means of a single modulator with multitone carrier and in the receiver the single sub-channels are brought back to the original band by means of a single demodulator with multitone carrier.

FIG. 17.

## 1 Introduction

The advantage of techniques of amplitude modulation in quadrature of orthogonal multiplexing (from herein on referred to as OQAM) on radio channels for high speed modems and for digital television, in comparison with of other classic configurations, is well known from technical literature, as resulting for example from the following articles:
- B. Hirosaki, "An Orthogonally Multiplexed QAM System using Discrete Fourier Transform", IEEE Trans. on Communications, vol. COM-29, n.7, July 1981;
- T. Long, "Digital Television Broadcasting in Europe", NAB 1992, Broadcasting Engineering Proceedings;
- J. A. C. Bingham, "Multicarrier Modulation for Data Transmission: An Idea Whose Time Has Come", IEEE Communications Magazine, May 1990, pp. 5-14;
- B. R. Saltzberg, "Performance of an Efficient Parallel Data Transmission System", IEEE Trans. on Communications, vol. COM-15, N. 6, December 1967, pp. 805-811.

The OQAM technique is similar to the "trasmultiplexer", i.e. the digital translation of a time divided multiplexed signal (TDM) in a frequency divided multiplexed signal (FDM) of several audio channels: this technique received great interest to the beginning of the 80's. In fact the common objective of the two techniques is the location of a certain number of digital signals in equally spaced frequencies.

The search of completely digital implementations both of the trasmultiplexer and of the system OQAM has been pursued from many researchers and various solutions to the problem have been described in the literature. The greater part of them consisting in variations of the technique of Bellanger and others (see article: M.G. Bellanger and J.L. Daguet, "TDM-FDM Transmultiplexer: Digital Poliphase and FFT", IEEE Trans. on Communications, vol. COM-22, N. 9, September 1974, pp. 1199-1205), that is based on the fundamental observation that the desired frequency location of a certain number digital signals may be obtained with a 'scrambling' phase and corresponding 'descrambling', using the periodicity of the discrete time signals spectrum. This allows to execute all the operations at the speed of the input signals. In the original Bellanger technique the phase 'scrambling' is obtained with a DFT and the successive 'descrambling' with a bank of Poliphase filters.

In the article T.A.C.M. Clasen and W.F.G. Mecklenbräuker, "A Generalised Scheme for an All Digital Time-Division Multiplex to Frequency-Division Multiplex Translator", IEEE Trans. Circuit Sust., vol. CAS-25, May 1978, pp. 252-259, it is shown that it is also possible to use other 'scrambling' procedures, that involve both amplitude and phase. The classic configuration via DFT and bank Poliphase filters has been proposed by Hirosaki for OQAM systems (we see the abovementioned article).

A completely different architecture has been proposed for the Transmultiplexer in the articles:
- G. Cariolaro, S. Cucchi, F. Milled, "A New Transmultiplexer Scheme", IEEE Poc., vol. 70, July 1982;
- G. Cariolaro, S. Cucchi, F. Milled, "Transmultiplexer via Spread-Spectrum Modulation", IEEE Trans. on Communications, vol. COM-30, July 1982, pp. 1642-1655.

The essence of which consists of a single high speed poliphase filter, that replaces the bank of poliphase filters of the classical configuration, and of a 'chirp' modulator, that provides a multitone modulation (MTM) and replaces the DFT processor. This high speed serial implementation is almost equivalent in complexity to the parallel lower speed implementation of the classical architecture; however the serial implementation has a different distribution of the complexity: the part without memory, i.e. the MTM, is of a reduced complexity if compared to the DFT, while the complexity of the filter is slightly increased.

The aim of the present invention is that of illustrating the possibility of utilising the MTM architecture for OQAM systems.

The problem does not have an immediate solution inasmuch a OQAM system cannot be brought back to a transmultiplexer. The difference lays in the fact that the bands of single channels in a transmultiplexer are not superimposed, while in a OQAM system they partially superimposed.

On the other hand the MTM implementation does not require any superimposition, so as that some preliminary adjustments for satisfying this condition must be introduced.

Another difference lays in the fact that in the multiplexing of audio channels the phase characteristic of each channel is insignificant, while the multiplexing of data in the OQAM requires the guaranteeing the correct phase for every channel.

For reaching the established aim, invention has as its subject a data transceiver system via radio of amplitude modulation in quadrature of orthogonal multiplexing (OQAM), wherein a plurality of sub-channels occupy equally spaced frequencies, and the frequency location of sub-channels in the transmitter is realised by means of a single modulator with multitone carrier and in the receiver the single sub-channels

EP 0 656 705 A2

are brought back to the original band by means of a single demodulator with multitone carrier.

Further characteristics and advantages of the present invention will result in being clear from description that follows and from the annexed drawings, supplied purely as an explanatory and non-limiting example, wherein:

- figure 1 illustrates the principle diagram of a transmitter and of a OFDM receiver system;
- figure 2 illustrates the location of the carriers in the principle diagram of the transmitter for $N = 8$;
- figure 3 illustrates the frequency reply of the interpolator filter c(f) according to square root of the raised cosine;
- figure 4 illustrates the superimposition of the bands of sub-channels in the principle diagram of figure 1;
- figure 5 illustrates the diagram of a modified OFDM transmitter;
- figure 6 illustrates the block diagram DS(n) of the transmitter;
- figure 7 illustrates the premodulation operations and order for $N = 8$;
- figure 8 illustrates the standard complex diagram of the transmitter;
- figure 9 illustrates the non superimposition of the band of sub-channels in the standard complex diagram;
- figure 10 illustrates the synthesis of the standard complex diagram via IDFT and PPN;
- figure 11 illustrates the SCS diagram with poliphase filter and MTM;
- figure 12 illustrates the constellation of the multitone carriers for some values of N;
- figure 13 illustrates the characteristic of the poliphase filter;
- figure 14 illustrates the phase characteristic of the equaliser;
- figure 15 illustrates the 'data staggering' to the receiver;
- figure 16 illustrates the diagram OFDM;
- figure 17 illustrates the complete block diagram of the transmitter and of the receiver according to the invention.

So as to better illustrate the invention the principle diagram of a OFDM system and the necessary corrections for the non superimposition of the bands of single channels will first of all be demonstrated and therefore the new architecture will be presented and discussed.

For simplicity only the part of the system relative to the digital signals (of discrete time) is described while the parts regarding the digital-analog (D/A) and analog-digital (A/D) conversions has not been included.

Herein below the symbols and terms used in the description are: listed $N_2 = \frac{1}{2} N$;

2T: time spacing of complex data;

T: time spacing after 'staggering';

$T_o = 2T/2N$: time spacing of the OHM signal;

$F = 1/T$: low speed;

$F_o = 1/T_o$ NF: high speed;

$F_2 = \frac{1}{2} T = \frac{1}{2} F$

TX: transmitter;

RX: receiver;

DFT: discrete Fourier transform;

IDFT: DFT inverse;

PPN: poliphase network;

MTM: multitone modulation;

DS: 'Data staggering';

SCS: standard complex schema;

P/S: parallel-series conversion;

S/P: series-parallel conversion;

$g(t_o), G(f)$: filters of the principle schema;

$h(t_o), H(f)$: interpolators filters in the schema SCS;

$\Re$: real part;

$\Im$: imaginary part.

The time of the signals is shown in the form $nT, n2T, nT_o$ that evidences the spacing, or in the form t as opposed to nT or n2T and in the form $t_o$ rather than $nT_o$. In the Figures the spacings of the signals are explicitly shown in every section of the block diagrams.

3

## 2 Principle diagram of a OOAM system

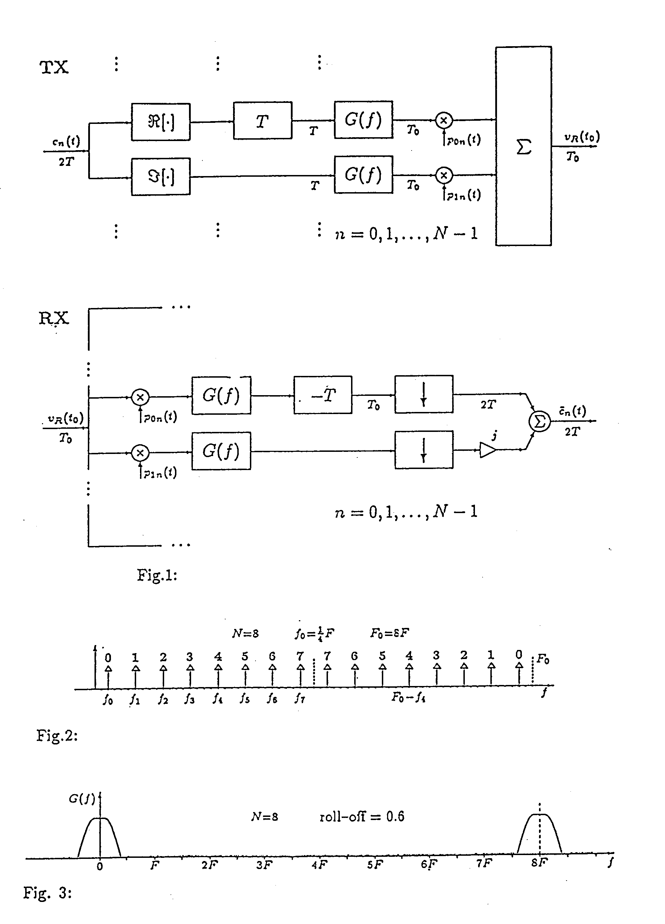

The principle diagram is illustrated in figure 1.

*Functions of the transmitter.*

The transmitter conveys N sequences of complex data

$c_n(t)$, $n = 0,1,...,N-1$,

that belong to specific constellations, for example QAM. The speed of $c_n(t)$ It is 1/2F values to the second. N is typically a power of 2.

Each sequence is divided in two parts: the real part $\Re c_n(t)$ and the coefficient of the imaginary part $\Im c_n(t)$. The first is retarded by T seconds (half of the original time spacing) and interpolated by a filter G(f), the second is interpolated directly by the same filter G(f). The signals interpolated are modulated by sine and cosine carriers according to the rule of alternation mentioned in the following. The signal produced by TX, $v_\Re(t_o)$, is real and has a speed equal to $F_o = NF$.

*The carriers.*

The carriers (Figure 2) are:

$Pon(t_o) = \sin 2pf_n to$ , $P1n(t_o) = \cos 2pf_n t_o$ for n even,
$pon(to) = \cos 2pf_n to$ , $p1n(to) = \sin 2pf_n t_o$ for n odd.

The frequencies are equally spaced according to the relations:

$f_n = f_o + nF$, $F_2 = \frac{1}{2} T$, $f_o = \frac{1}{2} F_2$.

In the frequency domain a sine cosine carrier with a frequency $f_n$ gives two contributions: to the frequency $f_n$ and $F_o - f_n$ (see Figure 2).

*The Filters.*

For re-establishing the initial sequences the cascade of filters in transmission and reception must be equivalent to a real Nyquist filter with a Nyquist frequency of $\frac{1}{2} F_2$. Typically filters have a reply frequency G(f) given by the square root of the raised cosine (see Figure 3).

*The functions of the receiver.*

The receiver carries out the operations inverse to those carried out in transmission, i.e. the received signal $v_\Re(t_o)$ (of discrete time and therefore after A/D conversion) is first of all demodulated with the same carriers used for the TX and thus two ways for every channel are produced: $\Re$ and $\Im$. The $\Re$ path is filtered from G(f), anticipated by T and reduced to the period 2T by a decimator filter; the $\Im$ path is filtered by G(f), decimated and multiplied by *j*. Finally the signals of the two paths are summed for reconstituting the original complex sequence $c_n(t)$.

*The performances.*

The system converts N sequences of complex data, each to the speeds $\frac{1}{2} F$, in a real sequence at a speed $F_o = NF$. The band occupied by the transmitted signal is Fo, while the bands of single channels, given by the intervals

$[f_n - (1 + \alpha) \frac{1}{2} F_2, f_n + (1 + \alpha) 1;2) F_2]$

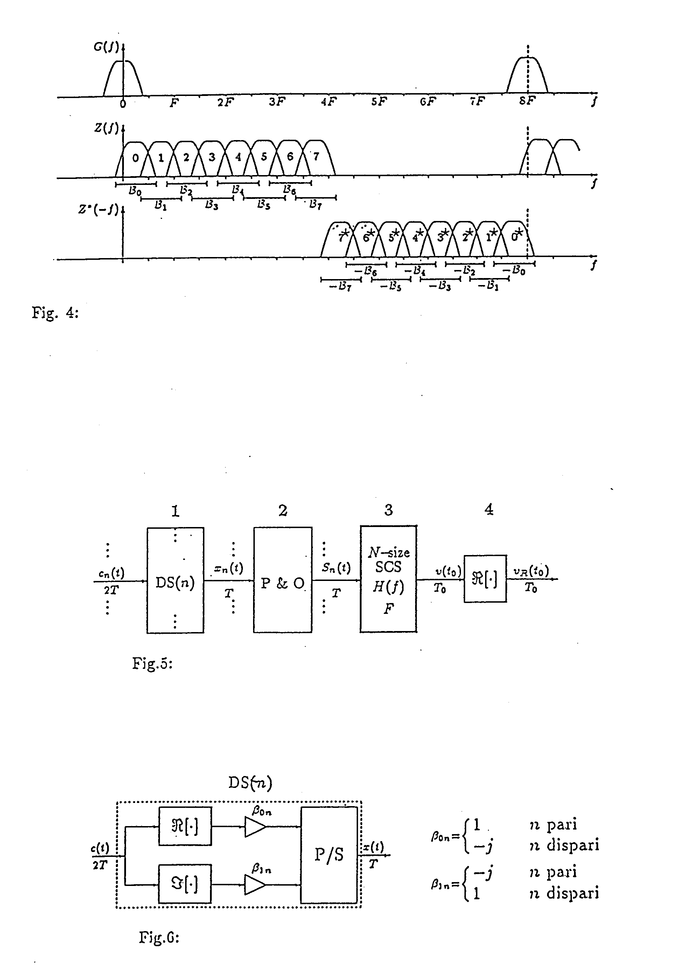

are superimposed as soon as the filters roll-off is positive. Such superimposition is illustrated in figure 4, wherein A) illustrates the frequency reply of the interpolator filter G(f) and in b) and c) the bands of the complex OQAM signal and of its conjugated complex are illustrated. The composition of b) and c) provides location of the bands of the real OQAM signal.

## 3. Modification of the principle schema

It has been seen that in the principle diagram the bands of the channels are partially superimposed which does not allow for the possible direct utilisation of the synthesis based on MTM, that requires non superimposition. It is therefore necessary to modify the principle diagram in a diagram wherein the bands are not superimposed. This is possible inasmuch it can be demonstrated that the principle diagram of the transmitter can be re-elaborated in a perfectly equivalent diagram and composed of four parts illustrated in figure 5. As will be seen, in part 3 the bands of the channels are not superimposed and it is in fact such part that will be synthesised by means of MTM.

The four parts of the modified diagram are now described.

**1)** The block DS(n) or 'Data staggering' (see Figure 6) is applied to every $c_n(t)$ input sequence. It groups the two runs obtained with real part and coefficient of the imaginary part by means of a P/S converter multiplying first by the complex quantity $-j$ the path that in the original diagram foresaw a sine modulation. In such a way the original complex sequences $c_n(t)$ with 2T spacing are converted in complex sequences $x_n(t)$ with T spacing.

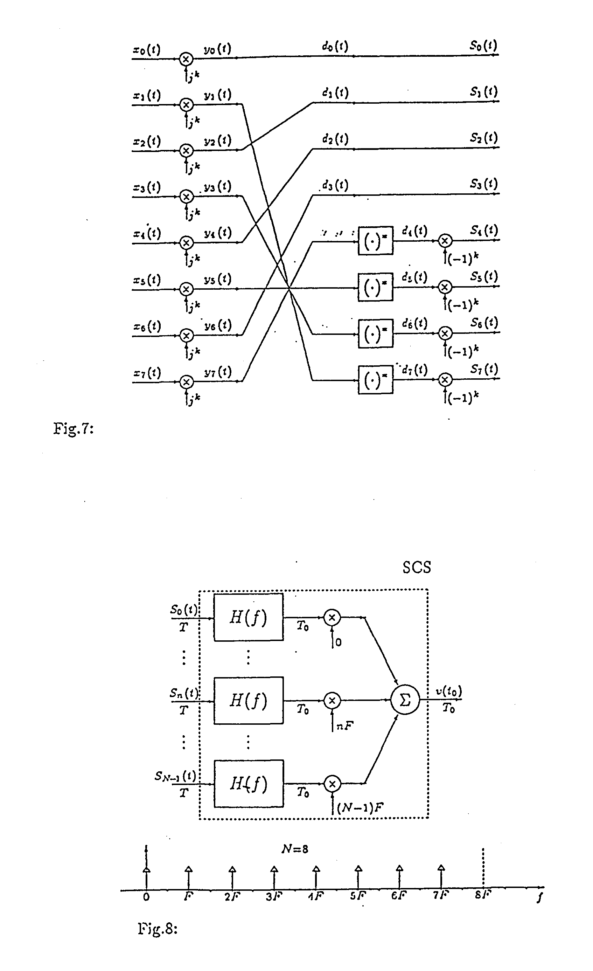

**2)** The block P&O (see Figure 7) executes the complex pre-modulation and data ordering, more precisely:

- a first pre-modulation according to relation

$$y_n(kT) = x_n(kT) \, (j)^k \qquad (4)$$

- an ordering according to relation

$$d_n(t) = y2n^{(t)} \qquad n = 0,1...,N_2-1$$
$$d_n(t) = y2N-2n-1^{(t)} \qquad n = N_2,...,N-1 \qquad (5)$$

- a second premodulation according to relation

$$S_n(kT) = d_n(kT) \qquad n = 0,1...,N_2-1$$
$$S_n(kT) = d_n(kT) \, (-1)^k \qquad n = N_2,...,N-1; \qquad (6)$$

wherein

$$N_2 = \tfrac{1}{2} N.$$

The (6) can written in the form

$$S_n(t) = d_n(t) \qquad n = 0,1...,N_2-1$$
$$S_n(t) = d_n(t) \, \exp(j2\pi F_2 t) \qquad n = N_2,...,N-1.$$

In conclusion processes of pre-modulation and ordering transform complex sequences $x_n(t)$ in complex sequences $S_n(t)$. It can be demonstrated that signals $S_n(t)$ are real for n odd and imaginary for n even.

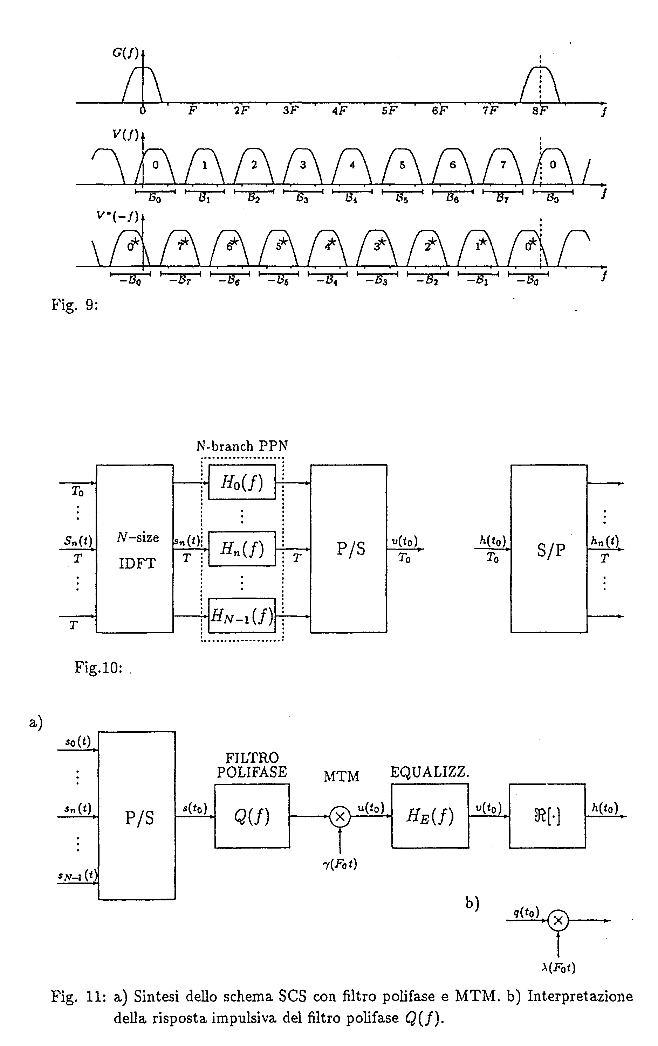

**3)** The block SCS (Standard Complex Diagram) is represented in figure 8 and will be discussed here in after.

The complexity of the modified diagram is completely concentrated in the SCS, while the complexity of other parts (DS,P&O,S/P, and $\Re$) is insignificant. Thus particular attention must be dedicated to the diagram SCS.

It is made up of N branches, each of which provides:

a) a complex filter interpolator impulsive answer of which $h(t_o)$ is tied to the impulsive answer of the original filter of the relation

$$h(t_o) = g(t_o)e^{j2\pi f o t o} \text{ with } f_o = \tfrac{1}{2} F_2$$

Therefore the relation between the frequency replies is

H(f) = G(f-f$_o$);

b) a modulator with an exponential carrier having frequency nF;

c) an adder that combines the contributions of the different branches.

It is essential to observe that after modulators the bands of the signals do not superimpose, resulting spaced by F, while the bandwidth of the filter H(f) is the same as that of the filter (see point 3), i.e.:

$$(1 + a)F_2 = (1 + a) \tfrac{1}{2} F \leqq F.$$

The non superimposition is illustrated in figure 9 for N = 8; in a) the frequency reply is illustrated of the interpolate filter G($f$). In b) and c) the bands of the signal complex are illustrated at the output of the SCS and of its conjugate complex. The composition of b) and c) once again gives location of the bands of the real OQAM signal.

Obviously after the Real Part the superimposition of the bands is searched, as must be, inasmuch the modified diagram is perfectly equivalent to the principle diagram.

The computational complexity of the modified diagram, that it is essentially contained in the SCS, is almost certainly, equal to that of the principle diagram. Efficient synthesis is obtained suitably implementing the SCS.

A classical synthesis is shown in figure 10a. It consists in a processor IDFT of the order N that works at the speed F = 1/T, followed by a poliphase network with N branches (PPN) also at the speed F, followed by a converter P/S.

The PPN consists in a parallel of N different filters. The impulsive replies h$_n$(t) of these filters are tied to the impulsive reply h(t$_o$) of the interpolated filters appearing in the SCS by the conversion S/P, as illustrated in figure 10b. The complexity is naturally all concentrated in the processor IDFT and in the network PPN.

**4)** Finally block $\Re$ represents the operator of the real part that converts to real the final signal.

### 4. Description of the proposal solution

In the new architecture the modified diagram of figure 5 is taken as reference; DS, P&O and the real part remain unaltered, while the SCS is implemented in a way being completely different from the classic way of figure 10, based on the IDFT and on the PPN.

The implementation proposed in the invention is illustrated in figure 11 and consists in:

1) a parallel-series converter P/S, that provides the high speed input signal with s(t$_o$);

2) a high speed filtration with a poliphase filter Q(f);

3) a multitone modulator MTM with carrier $\gamma$(Ft$_o$); the term multitone will be explained in the following;

4) an equaliser H$_E$(f).

The components 2), 3) and 4) all work at the speed F$_n$ = NF.

*The multitone carrier.*

If we consider

$$\gamma(r) = W_{2N}^{r^2} \quad con \quad W_{2N} = e^{j2\pi/2N} , \qquad (7)$$

the MTM carrier is $\gamma$(F$_o$t$_o$). This carrier has a period T = NT$_o$ (for N even) and provides a "multitone" modulation. In fact, if we consider the function expressed as IDFT:

$$\gamma(r) = \sum_{q=o}^{N-1} \Gamma(q) \, W_N^{qr} , \qquad (8)$$

we obtain

6

$$\gamma(F_o t_o) = \sum_{q=o}^{N-1} \Gamma(q) \, e^{j2\pi qFto} \qquad\qquad (9)$$

where $\Gamma(q) = [\sqrt{N}g(q)]^{-1} \neq 0$. Therefore the carrier $\gamma(F_o t_o)$ applied to a high speed signal simultaneously produces N frequency displacements 0,F,2F,...,(N-1)F, from which the term "multitone".

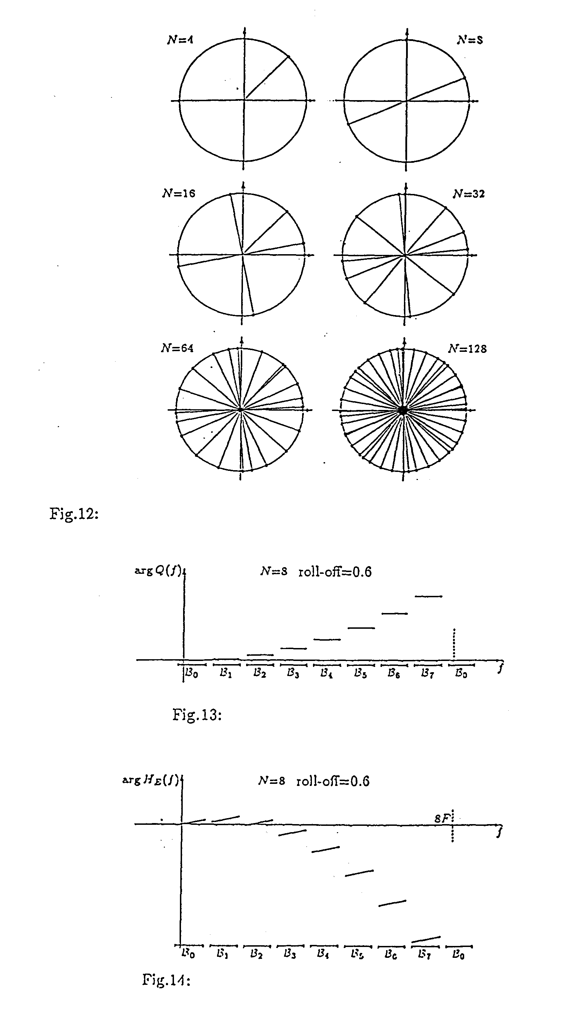

The constellation of the $\gamma(r)$ is illustrated in figure 12 for several values of N.

*The poliphase filter Q(f).*

The impulsive reply of the poliphase filter is
$q(t_o) = h(t_o)/\gamma(F_o t_o)$, i.e.

$$q(rT_o) = \lambda(r) \, h(rT_o) \; , \; \lambda(r) = 1/\gamma(r) \cdot W_{2N}^{-r^2} \qquad\qquad (10)$$

It is interpreted in figure 11b. The correspondent frequency reply may be written in the form

$$Q(f) = \sum_{n=o}^{N-1} \Lambda_n \, H(f-nF) \; , \; \Lambda_n = \frac{1}{\sqrt{N}} \cdot W_{2N}^{n^2} \qquad\qquad (11)$$

The poliphase filter is essentially an all-pass filter that produces a phase displacement $\pi n^2/N$ in the n. th band (see Figure 13), i.e. in the band

$$B_n = (-\alpha \frac{1}{\Lambda} F + nF, (2+\alpha) \frac{1}{\Lambda} F + nF), \qquad (12)$$

where $\alpha$ is the roll-off of the raised cosine. Outside of these bands the phase characteristic may be arbitrary.

*The equaliser $H_E(f)$*

The frequency reply of the equaliser is

$$H_E(f) = W_{2N}^{-n^2} \, e^{j2\pi fnTo} \; , \; f \in B_n \, , \qquad\qquad (13)$$

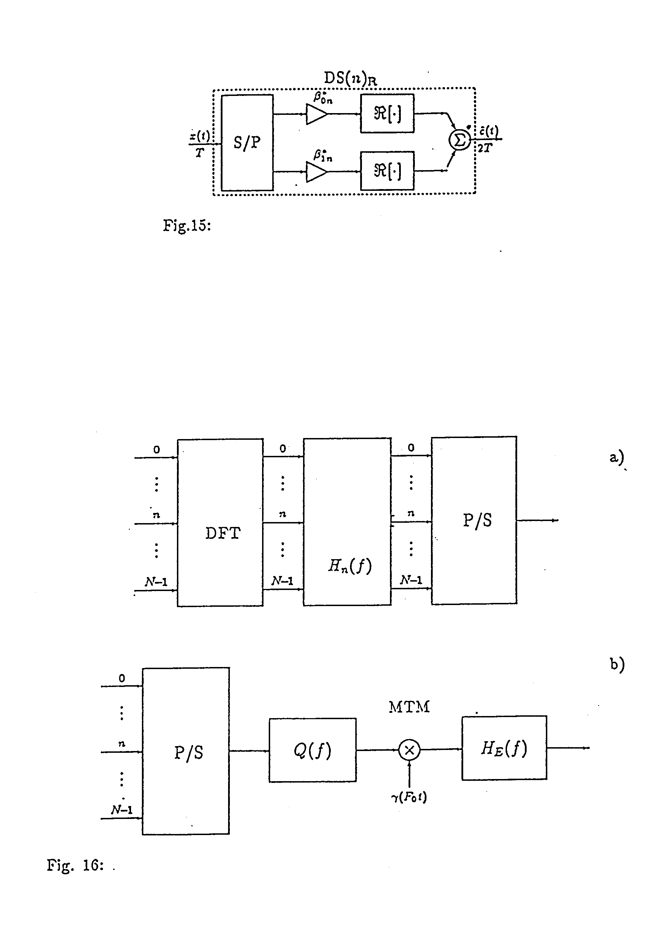

This is shows a linear phase in all bands $B_n$ (see figure 14).

*The receiver.*

The receiver may be implemented with the inverse operations, obtained by conjugate complex components.

For obtaining the synthesis of the receiver starting from the modified diagram of figure 5, omitting the Real Part, and thus reversing in the order blocks 3,2 and 1, obtaining blocks
- $SCS_R$: the standard complex diagram to the receiver;
- $P\&O_R$: the premodulated and order to the receiver;
- $DS_R$: date staggering to the receiver.

The block $P\&O_R$ is obtained by running the block corresponding to TX backwards and replacing the multipliers for $j^k$ with $(-j)^k$ inasmuch they must replace the original operations with those being conjugated.

The inversion of the block DS is less standard and is illustrated in figure 15.

The inversion of the SCS is obtained by running the diagram of figure 8 backwards and making the replacements with the known rules.

Obtained in this way

a) a node in place of the adder;

b) a demodulator with an exponential frequency carrier -nF in the branch n-[th].

c) a decimator filter with conjugate impulsive reply

$$h(t_o)_R = h^*(t_o)$$

Obtaining the modified diagram to the receiver in this way, it is noted that also in this case the computational complexity is limited to the block SCSR. This is the object of the efficient synthesis for which the present invention proposes the following solution, that is obtained in view of this for the transmitter with the usual rules of inversion. It results in being composed in an orderly manner from the following blocks (see figure 16, in which with a) the solution by way of DFT and poliphase network is shown and in b) the solution by way of poliphase filter and MTM):

a) equaliser with conjugate impulsive answer

$$h_E(t_o) = h^*_E(t_o)_R \; ;$$

b) modulation with conjugate MTM carrier

$$\gamma(t_o)_R = \gamma^*(t_o) \; ;$$

c) poliphase filter with conjugate impulsive answer

$$q(t_o)_R = q^*(t_o) \; .$$

From that shown the complexity of the RX based on the synthesis via MTM and poliphase filter results in being exactly the same as the TX.

*Complexity.*

The multitone modulator MTM must execute $F_o = NF$ complex multiplications to the second. This must be confronted with the complexity of a processor DFT of order N at the speed F, given by $(N \log_2 N) F = F_o \log_2 N$ operations per second. Therefore the complexity of the modulator MTM is $\log_2 N$ times lower than the complexity of the IDFT (or DFT). For example with $N = 1024$ (proposed value for transmitting the TV in a digital way) the complexity reduction is that of 10 times.

Regards the poliphase filter, the frequency reply in terms of z transform (transfer function) will be rewritten. As $G(z)$ the transfer function of the original filter. Then results in

$$H(z) = G(zW_{\Lambda N}^{-1})$$

and from (11)

$$Q(z) = \sum_{n=o}^{N-1} \Lambda_n \, H(z \, W_N^{-n}).$$

Now a realisation FIR di $G(z)$ may be considered

$$G(z) = \sum_{r=o}^{L} g_r z^{-n} \tag{14}$$

Then, $H(z)$ results in being a filter FIR with the same degree LM as $G(z)$ and coefficients $h_r = W_{4N} \, g_r$. Whereas from (10) it follows that coefficients of $Q(z)$ are $q_r = \lambda(rT_o) \, h_r$. In conclusion, starting from (14) it is

8

found that Q($z$) may be implemented as FIR with the same degree of the reference filter G($z$) and i.e.

$$Q(z)=\sum_{r=o}^{L-1}q_r z^{-r} \qquad\qquad (15)$$

with

$$q_r=W_{2N}^{-r^2} \quad h_r=W_{2N}^{-r^2} W_{4N}^{-r} g_r$$

Finally as far as regards the equaliser, the function $P_o(f)$ thus defined is introduced

$$P_o(f) = \quad 1, f \; E \; B_o \; U \; B_1 \; U...U \; B_{N-1}$$

$$0, \text{elsewhere},$$

where $B_N$ are bands of single channels defined by (12). Then the frequency reply (13) may be written in the form:

$$H_E(f)=\sum_{n=o}^{N-1}W_{2N}^{-n^2} e^{j2\pi fnTo} P_o(f-nF)$$

In terms of $z$-transform the following results:

$$H_E(z)=\sum_{n=o}^{N-1}W_{2N}^{-n^2} z^n P_o(zW_N^{-n})$$

A causal version is

$$H_{Ec}(z)=z^{-N} H_E(z)=\sum_{n=1}^{N}W_{2N}^{-n^2} z^{-n} P_o(zW_N^{n}) \; ,$$

Now we may suppose that $P_o(z)$ has a FIR structure

$$P_o(z)=\sum_{r=o}^{N}a_r z^{-r}$$

Then also $H_{Ec}(z)$ has a FIR structure

$$H_{Ec}(z)=\sum_{m=1}^{L+N}b_n z^{-m} \qquad\qquad (16)$$

9

where

$$b_{m=}W_{2N}^{-m^2} \sum_{r=cm}^{dm} W_{2N}^{r^2} \alpha_r \,, \qquad (17)$$

con $c_m = \max(0,m-r)$ e $d_m = \min(m-1,L)$. In fact

$$b_{m=} \sum_{n=1}^{N} \sum_{r=o}^{L} W_{2N}^{-n^2} \alpha_r \, W_N^{-rn} \qquad (n+r=m)$$

$$= \sum_{n=1}^{N} \sum_{r=o}^{L} W_{2N}^{n(n+r)^2} W_{2N}^{r^2} \alpha_r = W_{2N}^{-m^2} \sum_{n=1}^{N} \sum_{r=o}^{L} W_{2N}^{r^2} \alpha$$

that is equivalent to (17).

In conclusion, we can affirm that the MTM implementation has a reduced complexity if compared to the IDFT processor, while the part comprising filter and equaliser is slightly more complicated.

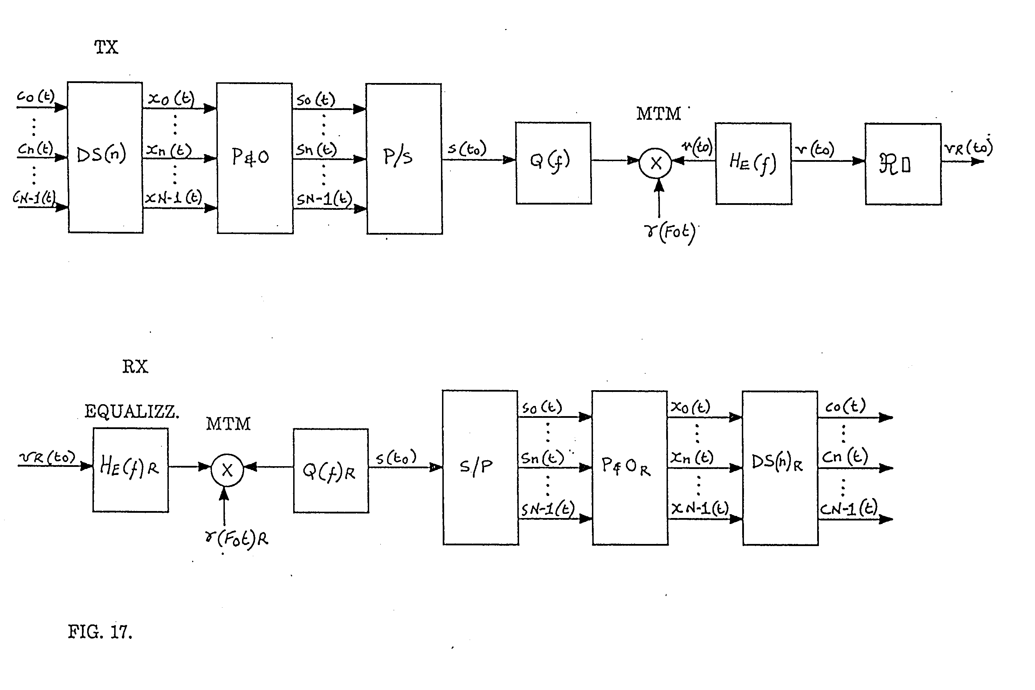

The complete block diagram of the transmitter OQAM (TX) for the transmission of N sequences of complex data, based on poliphase filter and multitone modulation, and of the correspondent receiver (RX) according to invention is shown in figure 17.

From the executed description the characteristics of the data transceiver system subject of the present invention present result in being clear, as do its advantages.

It is also clear that numerous variations can be introduced to the transceiver system subject of the present invention present, without departing from the novelty principles inherent in the innovative idea, as it is clear that in a practical realisation of the invention materials and the forms of the illustrated details may be different, and the same can be replaced with technically equivalent elements.

**Claims**

1. Data transceiver system via radio of amplitude modulation in quadrature of orthogonal multiplexing (OQAM), wherein a plurality of sub-channels occupy equally spaced frequencies, and the frequency location of sub-channels in the transmitter is realised by means of a single modulator with multitone carrier and in the receiver the single sub-channels are brought back to the original band by means of a single demodulator with multitone carrier.

2. Transceiver system according to claim 1, characterised in that said multitone carrier is of the type $\gamma$-$(F_o t_o)$,

$$\text{dove } \gamma(r) = W_{2N}^{r^2}$$

with $W_{2N} = e^{j2\pi/2N}$ and that in the receiver the single sub-channels are brought to the original band by means of a single demodulator with multitone carrier $g^*(F_o t_o)$, wherein $g^*(r)$ is the conjugate complex of the function $g(r)$.

3. Transceiver system according to claim 1 or 2, characterised in that in the transmitter the network of N filters of the known solutions is substituted with a single poliphase filter with frequency reply $Q(f)$ specified in the relation (11), completed by a single equaliser the frequency reply of which is specified in the relation (13)

4. Transceiver system according to claim 3, characterised in that said poliphase filter and said equaliser are implemented with an architecture of a FIR type in accordance with that specified in the relations (15) and (16) respectively.

5. Transceiver system according to one or more of the previous claims, characterised in that a block (DS) is foreseen in the transmitter that receives every input sequence ($c_n(t)$) and that regroups the two paths obtained with real part and coefficient of the imaginary part by means of a parallel series converter (P/S) multiplying first by the complex quantity $-j$, the path that in the original diagram foresaw a sine modulation, in such a way the original complex sequences ($c_n(t)$) with 2T spacing are converted in complex sequences ($x_n(t)$) with T spacing.

6. Transceiver system according to claim 5, characterised in that a further block (P&O) is foreseen in the transmitter that executes the complex pre-modulation and data ordering, more precisely:
   - a first pre-modulation according to relation (4),
   - an ordering according to relation (5),
   - a second premodulation according to relation (6),
   so as that the pre-modulation and ordering processes transform complex sequences ($x_n(t)$) in arrival as new complex sequences $S_n(t)$.

7. Transceiver system according to claim 5, characterised in that a further block (SCS) is foreseen in the transmitter made up of N branches, each of which provides:
   - a complex filter interpolator impulsive answer of which $h(t_o)$ is tied to the impulsive answer of the original filter of the relation

   $$h(t_o) = g(t_o)e^{j2\pi f o t o} \text{ with } f_o = \tfrac{1}{2}F_2;$$

   - a modulator with an exponential carrier having frequency nF;
   - an adder that combines the contributions of the different branches;
   so as that after the modulators the bands of the signals do not superimpose, resulting spaced by F, while the bandwidth of the filter H(f) is less than F.

8. Transceiver system according to claim 5, characterised in that a further block ($\Re$) is foreseen in the transmitter that represents the operator of the real part that converts to real the final signal.

9. Transceiver system according to one or more of the previous claims, characterised in that the transmitter comprises:
   - a parallel-series converter P/S, that provides the high speed input signal with($s(t_o)$);
   - a high speed filtration with a poliphase filter (Q(f));
   - a multitone modulator (MTM) with carrier $\gamma(Ft_o)$;
   - an equaliser ($H_E(f)$).

10. Data transmitter conforming to the system according to one or more of the previous claims.

11. Data receiver conforming to the system according to one or more of the previous claims.

Fig.1:

Fig.2:

Fig. 3:

12

Fig. 4:

Fig.5:

Fig.6:

$$\beta_{0n}=\begin{cases}1 & n \text{ pari} \\ -j & n \text{ dispari}\end{cases}$$

$$\beta_{1n}=\begin{cases}-j & n \text{ pari} \\ 1 & n \text{ dispari}\end{cases}$$

Fig.7:

Fig.8:

Fig. 9:

Fig.10:

a)

b)

Fig. 11: a) Sintesi dello schema SCS con filtro polifase e MTM. b) Interpretazione della risposta impulsiva del filtro polifase $Q(f)$.

Fig.12:

Fig.13:

Fig.14:

16

Fig.15:

a)

b)

Fig. 16: .

FIG. 17.